# EUROPEAN PATENT APPLICATION

(11) **EP 0 858 036 A2**
(43) Date of publication of application: **12.08.1998**
(21) Application number: 98300808.7
(22) Date of filing: 04.02.1998
(51) Int. Cl.: G06F 13/42, G06F 3/06, H04L 29/06

(54) **Fibre channel attached storage architecture**

(30) Priority: 10.02.1997 US 797129; 11.02.1997 US 798962; 25.02.1997 US 805281
(71) Applicant: Compaq Computer Corporation, Houston Texas 77070 (US)
(72) Inventor: Skidmore, Alan E., Houston, Texas 77070 (US); Schultz, Stephen M., Houston, Texas 77069 (US); Scholhamer, George J., The Woodlands, Texas 77381 (US); Thompson, Mark J., Spring, Texas 77379 (US); Rushton, Tod D., Tomball, Texas 77375 (US); Freeman, Eugene E., The Woodlands, Texas 77381 (US); Alexander, Dennis J., Spring, Texas 77379 (US); Callison, Ryan A., Spring, Texas 77379 (US); Grieff, Thomas W., Spring, Texas 77379 (US); Sabotta, Michael L., Cypress, Texas 77429 (US); Grant, David L., Houston, Texas 77068 (US); McCarty, James F., Spring, Texas 77379 (US); Schneider, Randy D., Spring, Texas 77379 (US); Galloway, William C., Houston, Texas 77083 (US)
(74) Representative: Brunner, Michael John

(57) **Abstract**

A system and/or network (50) for connecting at least one server (52) to at least one storage device (56) via a Fibre Channel (54). Such a system is capable of providing connection redundancy, high speed data rates, multiple operating systems and, hot plugging. Furthermore, the system allows for a large number of devices to be connected to the Fibre Channel. The devices, being servers, storage devices, or other system related appliances can be separated by more than 10 miles and still communicate via the Fibre Channel at high data rates.

## Description

This invention relates to a system or network architecture which connects computer systems to data storage devices via a Fibre Channel Connection. More particularly, this invention relates to connecting one or more network servers to one or more storage devices via a Fibre Channel Arbitration Loop network.

Presently, computer networks are becoming more and more dependant on mass storage. In fact, mass storage on some systems is becoming a near-bottomless storage space for storing gigabyte upon gigabyte of information.

Regardless of the size of a mass storage device, today's computer networks require that information stored in a mass storage device be easily accessible and be able to flow either into the storage device or out of the storage devices at extremely high data rates. In fact the higher and more error free the data rate the better the mass storage system.

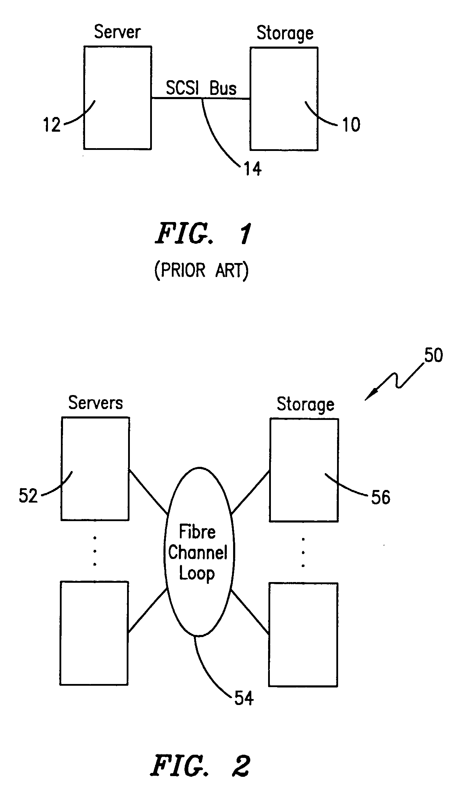

At present, the computer industry relies on the SCSI format for connecting a computer system with mass storage. The SCSI bus can communicate at approximately 20 megabytes per second. FIGURE 1 depicts the prior art solution wherein a disk storage unit 10 is attached to a network server 12 via a SCSI bus 14.

The SCSI bus presents a variety of problems and setbacks that the industry is grappling with. For example, the SCSI bus connection provides insufficient data rates for a server. In other words, the SCSI bus is too slow to fully utilize the present speed and capabilities of a network server and is not capable of addressing enough disk storage to accommodate a server.

The SCSI bus connection does not provide a mass storage architecture with interconnection redundancy so that if there is a failure, in part of the server or the storage device, a user is not assured that the data from the storage device is still accessible.

The SCSI bus connection is not readily or easily adapted to allow two different servers to share data located on a single storage device.

The SCSI bus system is also difficult to make hot pluggable. That is, devices, such as servers or storage units, cannot easily be added or "plugged into" the SCSI bus while the system is on or while data is flowing through the network buses. Furthermore, the SCSI cabling is heavy, messy, bulky and inflexible.

Thus, it would be advantageous in the area of mass storage for computer servers and computer networks to remedy the aforementioned drawbacks of the SCSI bus.

According to the present invention a Fibre Channel attached storage architecture remedies the problems and drawbacks of the prior art SCSI bus storage architectures by eliminating the use of a SCSI bus and incorporating therefor a Fibre Channel attached storage architecture.

The Fibre Channel attached storage architecture increases the speed of data reads and data writes between a server and a storage device to above 100 megabytes per second (at least five times that of a SCSI bus). It provides greater capacity for a server because a server can be connected to a plurality of storage devices. It also provides for data sharing among clustered or networked servers since multiple storage devices can be connected to multiple servers. The Fibre Channel storage architecture can also be "hot plugged" thereby allowing servers, storage devices, or other devices to be connected or disconnected to the Fibre Channel while it is in operation.

These and other advantages and objectives of the invention will become apparent and more readily appreciated from the following description of the presently preferred exemplary embodiments, taken in conjunction with the accompanying drawings, in which:
FIGURE 1 depicts a block diagram of a prior art SCSI bus connecting a single server with a single storage device;
FIGURE 2 depicts a block diagram of a first exemplary computer system having a Fibre Channel attached storage architecture;
FIGURE 3 depicts a block diagram of a second exemplary embodiment of a Fibre Channel attached storage architecture;
FIGURE 4 depicts a block diagram of a third exemplary embodiment of a Fibre Channel attached storage architecture;
FIGURE 5 depicts a block diagram of a fourth exemplary embodiment of a Fibre Channel attached storage architecture;
FIGURE 6 depicts a block diagram of a fifth exemplary embodiment of a Fibre Channel attached storage architecture;
FIGURE 7 depicts a block diagram of a sixth exemplary embodiment of a Fibre Channel attached storage architecture; and
FIGURE 8 depicts a block diagram of an eighth exemplary embodiment of a Fibre Channel attached storage architecture.

The preferred Fibre Channel attached storage architecture can be used as a building block for future computer systems. It can provide high capacity data storage and retrieval with redundancy such that faults and transmission errors are recoverable. The architecture provides great flexibility in terms of the distance that the data can be sent over a data bus and in terms of the ease of use with present day external storage subsystems.

The present invention incorporates the use of Fibre Channel. A Fibre Channel is a multi-topology, physical transport channel intended to serve as a common physical layer to transport multiple upper layer protocols such as SCSI, IP, ICI and others. Fibre Channel provides a low cost, arbitrated loop topology. Fibre Channel is ideal for handling the large block size data transfer requirement of digital video and imaging systems.

Fibre Channel offers substantial date speed advantages (at least five times the data rate) over a wide SCSI bus. It provides very high performance and multiple protocol interconnections. These advantages lower the cost and make super computing possible on disk drives, server networks, workstations, and personal computers.

Fibre Channel is relatively simple. Fundamentally, it is a point to point connection, but handles multiple nodes through an arbitrated loop (a logical loop) of multiple point to point connections. The arbitrated loop protocol provides 127 physical node addresses. In arbitration loop, no central switch is used to establish communication, but rather an arbitration protocol is established for each node to communicate on a channel. Once a node wins the right to communicate, it opens a connection to another node and full, duplex 1.0625 Gbit/sec data transfer between the two participating nodes can commence. All other nodes act as repeaters. The Fibre Channel's loop oriented connections provide a flexible relationship between servers and storage devices because there is no longer a requirement that there be a tight one-to-one direct cable relationship (as is required in SCSI cabling).

Referring now to FIGURE 2 a basic block diagram of an embodiment of a Fibre Channel attached architecture 50 is shown. One or more servers 52 are connected to a Fibre Channel loop 54. The Fibre Channel loop is connected to one or more storage devices 56. Thus, one or more servers 52 are attached to one or more storage boxes 56 in a relationship that is mapped through a Fibre Channel loop 54.

The configuration of the Fibre Channel attached storage architecture shown in FIGURE 2 provides several benefits. First, the accessible storage capacity of each server connected to the Fibre Channel loop is increased due to the greater number of storage devices that each server 52 has access to (i.e. there is greater connectivity per server slot). Second, data availability is enhanced because the Fibre Channel loop 54 enables sharing of storage devices without the limitation of previous generation technologies. Third, the present embodiment provides "hot growth", meaning it is possible to implement a Fibre Channel attached storage architecture with a few servers or storage devices and enlarge the system at a later time by "hot plugging" storage boxes 56 onto the fibre loop 54 while the system is powered on and while data is active on the fibre loop 54. If data is disturbed on the fibre loop 54 during hot plugging the system is adapted to perform an error recover cycle and correct data that may be part of a "broken" data packet. Thus, the hot plugging can take place not only when the system is powered, but also when the system is actively transferring frames of data.

Another benefit of hot plugging, associated with the exemplary embodiment, is that one can have a system with media exchange capabilities. In other words, initially the architecture may be set up to have multi-mode fibre connections in the fibre loop at about 300 to 500 metre distances. A user may want to upgrade the network by connecting a single-mode fibre that allows data to go ten kilometres. With the exemplary architecture one of ordinary skill in the art can simply add (plug in) the upgraded hardware without changing the software of any of the storage devices or servers. Thus, hot plugging makes the exemplary embodiment very flexible and upgradable. A fourth benefit of the exemplary Fibre Channel attached storage architecture is that the performance associated with the Fibre Channel increases the rate at which data can be read from or written to a storage device. For example, a SCSI bus system (FIGURE 1) has a data rate of approximately 20 megabytes per second. There are some technologies that improve on the SCSI bus speed, but nothing substantial. Conversely, the fibre loop, incorporated into the exemplary embodiment has a data rate capability of over 100 megabytes per second. The data rate increase incorporated into the exemplary Fibre Channel attached storage architecture is a large advancement over the SCSI technologies. As a fifth benefit, integration of more storage devices is easily made with the present embodiment. That is, it is relatively easy for someone having ordinary skill in the art to integrate primary storage with secondary storage on the same interconnection so that the primary and secondary storage devices look like a single larger storage device for a data base associated with a server or cluster of servers.

A sixth important aspect of the present exemplary Fibre Channel attached storage architecture is the distance that the devices associated with the Fibre Channel loop can be from each other. That is, with the prior art SCSI bus based systems all the servers and storage devices had to be within a few metres of each other due to limitations of the SCSI bus. Conversely, the Fibre Channel loop, in cooperation with the exemplary servers and storage devices, is capable of allowing device separations of about 10 kilometres, point-to-point, with single-mode fibres. The present exemplary architecture allows a user to provide disaster recovery or remote mirroring of data and/or servers with the exemplary distance capabilities. Furthermore, servers and storage devices located in various buildings for example, on a college or corporate campus can all be easily connected.

A seventh aspect of the present exemplary Fibre Channel attached storage architecture is that the cables are fibre optic in nature and the Fibre Channel loop uses a serial protocol instead of a parallel bus protocol. This configuration requires essentially only one data signal line for a logical transfer of data and results in small connector cables, when compared with the former parallel cables of the SCSI bus. Size is an important feature of the present exemplary embodiment. That is, if the user is a small business with computer on a table, size is probably not a big deal. On the other hand, if you are, for example, a large corporate entity and have multiple servers in a rack, the cables can become congested and clutter the rack thereby causing problems. Smaller cables, cable connections and the ability to spread systems out (distance wise) are advantageous.

An eighth positive aspect, associated with the exemplary Fibre Channel attached storage architecture, is the ability to consolidate storage across heterogeneous platforms. Meaning, servers from different manufacturers can use the architecture of the present invention to attach servers, storage devices, and subsystems operating on various protocols to a single Fibre Channel attached storage architecture and retain the ability to communicate and operate efficiently.

The present invention can be implemented in various phases which will be explained below. The stages include a basic Fibre Channel attached storage implementation, a shared storage implementation, a shared redundant path storage implementation, an integrated secondary storage implementation, a multiple network operating system shared storage implementation, and a heterogeneous shared storage system implementation. It should be noted and understood that the different implementations build on or are aggregates of each other.

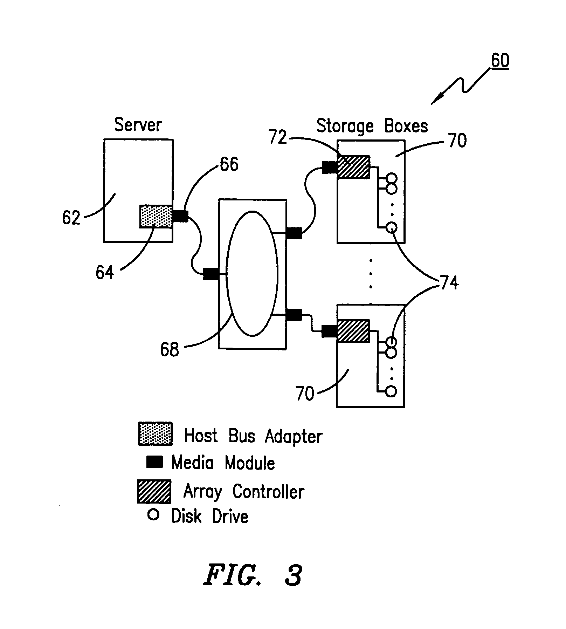

Referring to FIGURE 3 a second exemplary embodiment of the present Fibre Channel attached storage architecture is presented. The second embodiment is the basic Fibre Channel attached storage implementation 60. A single server 62 comprising a host bus adapter circuit 64 is connected to a media module 66. The media module is used to connect the server to a fibre loop 68.

Attached to the fibre loop are a plurality of storage boxes/storage devices 70. Each storage device is attached to the fibre loop 68 via a media module 66. The media module is connected to an array controller 72. The array controller 72 is designed to control the various disk drives 74 located in the storage boxes 70. This configuration provides more storage capacity accessible to a server 62 when compared to the prior art SCSI based systems or other prior art systems.

The storage box 70 preferably has eight disk drives 74 within it. Each drive can have a storage capacity of 9 gigabytes. Thus, each storage box 70 has a storage capacity of 8 drives times 9 gigabytes per drive, or 72 gigabytes per storage box. If, for example, a fibre loop 68 has six storage devices 70 attached to it, then there are 6 storage boxes times 72 gigabytes per storage box or 432 gigabytes of storage capacity available to each of the servers attached to the Fibre Channel attached storage architecture. The storage boxes of the exemplary embodiment incorporate SCSI hard disk drives. It is understood that a storage box 70 can be configured a variety of ways, that is, a storage box can have more or less memory capacity depending on the storage devices used in the storage box.

The fibre loop configuration of the second exemplary embodiment shown in FIGURE 3 has a single server 62 with a single by-pass fibre loop hub 68. The host bus adapter 64 is preferably a PCI-to-Fibre Channel host bus adapter. The host bus adapter can be a printed circuit board that fits in a PCI slot or an EISA slot in a host server. The host bus adapter 64 provides the mapping of data from the host PCI bus or EISA bus to the Fibre Channel loop. Essentially, the host bus adapter 64 adapts or translates the data from the host server's PCI or EISA bus to the Fibre Channel loop protocol.

The exemplary array controller 72, located in conjunction with the storage boxes 70, is a Fibre Channel-to-SCSI array controller. The array controller 72 preferably is a printed circuit board with a microprocessor on board. The array controller 72 controls an array of disk drives or storage devices such as tape drives, read/write optic drives, etc. The array controller is programmed to provide fault tolerance.

The media modules are short wave fibre optic media devices that convert fibre optic signals to electrical signals and vice versa.

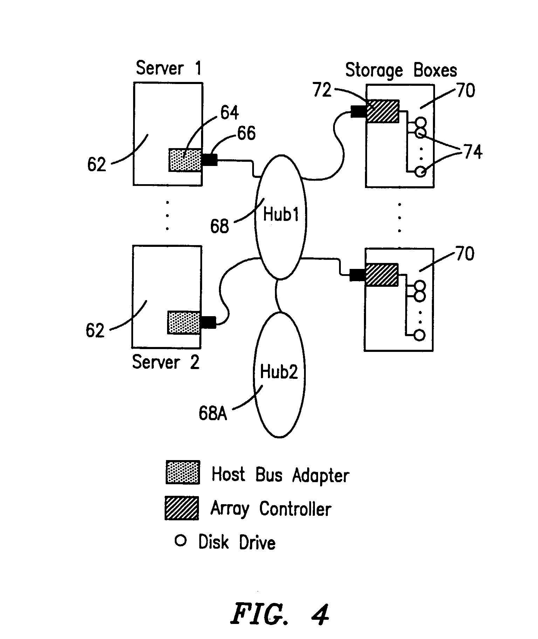

FIGURE 4 is another embodiment of the present Fibre Channel attached storage architecture. This embodiment is an extension of the embodiment depicted in FIGURE 3 by allowing multiple servers to be attached to the same storage fibre loop. This embodiment allows two or more servers to access the same data. The storage is considered shared storage. Thus, this embodiment incorporates a shared storage implementation. The advantage of having more than one server access the same data is that it provides fail-over protection. That is the data can still be accessed if one server fails.

FIGURE 4 depicts a plurality of servers 62 connected to a fibre loop via host bust adapter 64 and a media module 66. The fibre loop 68 is further connected to a plurality of storage boxes 70 via a media module 66. The storage box 70 incorporates an array controller 72 for controlling data throughput to a plurality of disk drives 74.

FIGURE 4 also exemplifies that a fibre loop 68 is cascadable. The cascaded Fibre Channel loop is not necessarily a separate Fibre Channel arbitrated loop. The cascaded loop extends the first loop by providing more ports. It is foreseen that switches and other devices will be designed to provide better performance and manageability of the cascaded loops. For example, the fibre loop 68 has a plurality of nodes. Assuming the fibre loop 68 has seven nodes, then six of the nodes can be connected to servers, storage devices, or other peripherals and the seventh node can be used to cascade with a second fibre loop 68A. Assuming the second fibre loop 68A also has seven nodes, then the remaining six nodes can be used to connect to either other cascaded loops, servers, storage boxes, or peripherals.

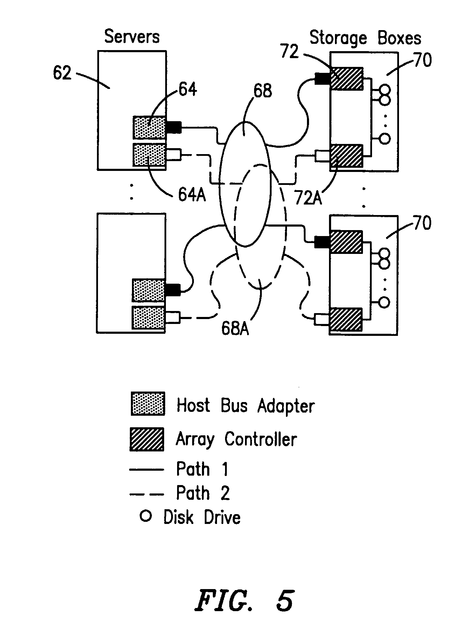

Referring now to FIGURE 5 there is incorporated a dual fibre loop thereby establishing shared redundant path storage implementation. The redundant loop can be a second independent (signal and physically) Fibre Channel arbitration loop. There is a second controller 72A in each of the storage boxes 70 and an additional host adapter 64A in each of the server hosts 62. This embodiment allows the dual fibre loop to provide greater levels of availability. What this means is that now a user or users who are logged onto a server 62 can be assured that data is accessible even if failures occur with the server 62, the adapters, the I/O paths, the storage boxes, the power supplies, the fans, the controllers, etc. Not only is sharing of data from various storage boxes to various servers provided, but there is sharing with redundancy. This redundancy is another solution and benefit that can be provided by this exemplary embodiment of the Fibre Channel attached storage architecture.

With full redundancy of the I/O paths (two fibre loops) a failure of one of the paths can be overcome by the redundancy of the second path. This embodiment is, to some degree a super set of the above described embodiments.

With a shared redundant path storage, the exemplary architecture provides fully redundant I/O paths with fail-over. The fibre loops remain hot pluggable and the features of the previously described exemplary architectures remain intact.

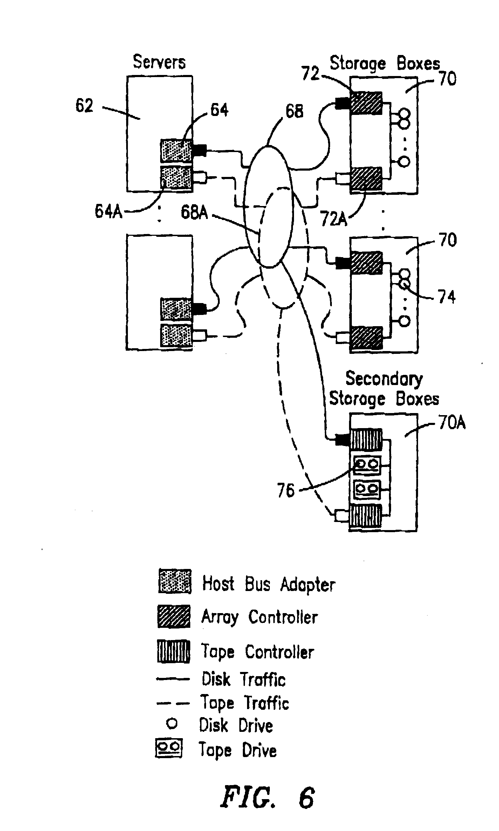

FIGURE 6 depicts another exemplary embodiment of the present Fibre Channel attached storage architecture. Here, an integrated secondary storage implementation is incorporated into the architecture. The architecture is basically the same as the architecture of FIGURE 5 except a secondary storage box 70A is added to the fibre loops 68 and 68A. The secondary storage box 70A comprises tape drives 76. Tape drives 76 are considered secondary storage devices to disk drives 74.

The benefit of providing a secondary storage box 70A with both disk drives 74 and tape drives 76 is that, with the speed provided by the Fibre Channel on the fibre loop, data can be directly transferred from disk drives to tape drives or vice versa without requiring further direction from a host server 62 and without competing for CPU time, memory space or, bus band width with other applications that are being executed on the host server.

It is understood that in the preferred embodiment the primary storage drives are disk drives and the secondary storage drives are tape drives, but one having ordinary skill in the art will understand that the storage drives could be re-recordable laser disks, optical drives, RAM memory devices or even CD-ROMS for read only purposes. In a nutshell, an exemplary embodiment may require a first storage device to be used as a primary storage means and a second storage means for use as secondary or backup storage to the primary storage.

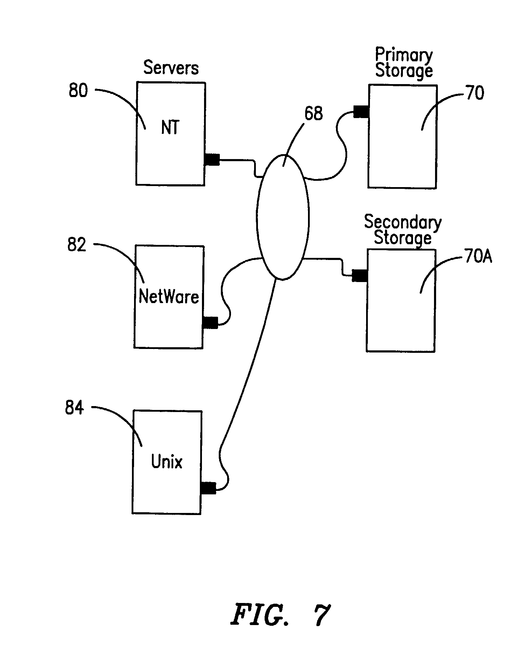

FIGURE 7 depicts yet another embodiment of the present Fibre Channel attached storage architecture. Here various different network operating systems are used in a plurality of servers. This embodiment provides a multiple network operating system shared storage implementation. For example, one server can be an NT® based server 80, another server can be a NetWare® based server 82, and a third server can be Unix based server 84. This exemplary architecture takes advantage of the industry standard interconnection, being Fibre Channel 68, for attaching the different network operating systems to shared storage 70.

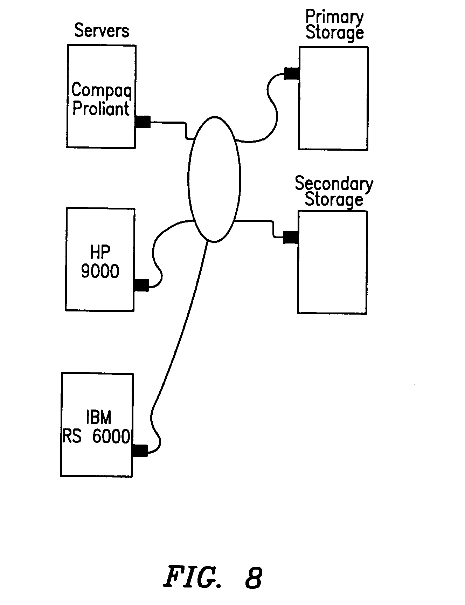

FIGURE 8 depicts another embodiment of the present Fibre Channel attached storage architecture wherein various server platforms are used in a plurality of servers. The configurations of FIGURES 7 and 8 are especially valuable to users who are required to operate different platforms or product lines for different applications. For example, there are certain Wall Street applications that only run on a Sun workstation. The users of the application cannot import the data to an NT® or Compaq® server based system. With the incorporation of the Fibre Channel loop into the attached storage architecture of the present invention, Sun workstations and other platforms can share the same data bases from shared storage. In a nutshell, multiple server platforms can share a storage box via connection with the Fibre Channel attached storage architecture.

It is understood that the exemplary Fibre Channel attached storage depicted in FIGURE 7 and 8 can also incorporate the various aspects described in the fore mentioned exemplary storage architectures. That is, there can be full redundancy, cascading, multiple servers, multiple storage devices, secondary storage devices, hot plugging, etc.

In summary, the above discussed exemplary embodiments provide a Fibre Channel attached storage architecture that allows a plurality of servers (either similar or different platforms) to share stored data from a plurality of storage devices over a Fibre Channel loop. The architecture can be fully redundant, expandable, hot pluggable and/or provide secondary storage capabilities. The various devices attached to the exemplary Fibre Channel attached storage architecture can be spread out over a 10 kilometre bus. Furthermore the data rate of the interconnection in excess of 1 gigabits per second. The cabling is simplified over parallel bus predecessors because it is optical fibre based and serial. In essence the exemplary architecture provides a high speed mass storage system that can provide enough storage for most of the needs of a modern day multiple server system.

## Claims

1. A computer system comprising:
a Fibre Channel interconnection;
a server connected to said Fibre Channel; and
a storage device connected to said Fibre Channel.

2. The computer system of claim 1, further comprising:
a host bus adapter connected between said server and said Fibre Channel.

3. The computer system of claim 1 or claim 2, further comprising a media module connected between said server and said Fibre Channel

4. The computer system of claim 1, further comprising an array controller connected between said Fibre Channel and said storage device.

5. The computer system of any of claims 1 to 4, which includes a plurality of servers connected to said Fibre Channel.

6. The computer system of any of claims 1 to 5, which includes a plurality of storage devices connected to said Fibre Channel.

7. The computer system of any of claims 1 to 6, further comprising a cascaded Fibre Channel loop connected to said Fibre Channel.

8. The computer system of any of claims 1 to 7, further comprising a redundant Fibre Channel connected to said server and connected to said storage device.

9. The computer system of claim 5, wherein two of said servers operate via a different operating systems.

10. The computer system of any of claims 1 to 9, wherein at least one of said storage devices is hot pluggable into said Fibre Channel while said computer system is powered.

11. The computer system of any of claims 1 to 10, wherein data can be transferred between said at least one server and said at least one storage device at a minimum data rate of 100 megabytes per second.

12. The computer system of any of claims 1 to 11, wherein said server or at least one server and said storage device or at least one storage device are more than 20 feet from one another.

13. The computer system of any of claims 1 to 12, further comprising a second Fibre Channel connected to said server or servers and to said storage device or devices.

14. The computer system of any of claims 1 to 13, further comprising a second Fibre Channel connected to said Fibre Channel such that additional servers and storage devices can be connected to said second Fibre Channel.
